# EUROPEAN PATENT APPLICATION

(11) **EP 4 811 747 A1**
(43) Date of publication of application: **23.09.2026**
(21) Application number: 26164341.5
(22) Date of filing: 12.03.2026
(51) Int. Cl.: H04L 61/4588, H04W 12/00

(54) **PRIVATE NETWORK INTEGRATED SECURITY METHODS AND SYSTEMS**

(30) Priority: 21.03.2025 GB 202504170
(71) Applicant: Vodafone Group Services Limited, Newbury RG14 2FN (GB)
(72) Inventor: HARPER, Alan, London, W2 6BY (GB); PEARCE, Daniel, London, W2 6BY (GB)
(74) Representative: Boult Wade Tennant LLP

(57) **Abstract**

There is described here a computer-implemented method of controlling user access to a private mobile network. A user is associated with a mobile device that comprises a subscriber identity module (SIM) having a private international mobile subscriber identity (private IMSI). A directory service lists a user identity for the user. The computer-implemented method comprises sending a notification, from the directory service to a private mobile network security controller, that the private IMSI has been assigned to the user identity in the directory service, and then activating, by the private mobile network security controller, the SIM in the private mobile network so as to allow the user access to the private mobile network via the mobile device.

## Description

### FIELD OF THE INVENTION

The present invention relates to private network integrated security methods and systems, and in particular to the integration of a user identity, in a directory service, with a private mobile network in order to control user access to the private mobile network.

### BACKGROUND

In a traditional information technology (IT) environment, directory services (such as Active Directory or other LDAP addressable equivalent systems) are used to manage user information and requirements, for example, a user's security group(s) that allow/restrict access in the IT environment.

Operational technology (OT) can be used for monitoring and securing a company's industrial operations, and often involves manufacturing environments or areas such as electric vehicles charger systems, ATMs and weather stations to name a few. Some examples of OT systems include industrial control systems (ICS), such as supervisory control and data acquisition (SCADA) systems, distributed control systems (DCS) and programable logic controllers (PLC).

OT environments typically use different network processes and protocols to those of IT environments, and they also have different security considerations. OT environments have traditionally been separated environments, i.e., air gapped (isolated from external connectivity), and so access to the OT environments has been managed independently, thereby reducing threats from the outside world.

However, over recent years there has been a shift to merge the IT and OT worlds. For example, companies desiring to manage both under one standard security policy. Merging such worlds brings new security risks to consider, particularly in contrast to the previously isolated OT environments. Furthermore, OT environments are increasingly leveraging private mobile networks. Private mobile networks currently rely on central subscriber databases, which include user information. This information is managed independently of the IT environment and so can lead to complexity and synchronisation issues between IT and OT environments. For example, when a user of the IT environment needs to be granted access to the private mobile network OT environment.

As such, there is a need for improved integration of IT and OT environments so as to simplify operations and provide a consistent, security approach.

### SUMMARY

In one aspect of the present invention, there is provided a computer-implemented method of controlling user access to a private mobile network. A user is associated with a mobile device that comprises a subscriber identity module (SIM) having a private international mobile subscriber identity (private IMSI). A directory service lists a user identity for the user. The computer-implemented method comprises sending a notification, from the directory service to a private mobile network security controller, that the private IMSI has been assigned to the user identity in the directory service. The computer-implemented method further comprises activating, by the private mobile network security controller, the SIM in the private mobile network so as to allow the user access to the private mobile network via the mobile device.

The user identity listed in the directory service may comprise a list of security groups for the user. The private mobile network may comprise a list of data network identifiers, and a list of allowed data network identifiers for the private IMSI. The computer-implemented method may further comprise receiving, by the private mobile network security controller, the list of security groups for the user, mapping the received list of security groups to the list of data network identifiers, and based on the mapping, updating the list of allowed data network identifiers for the private IMSI.

The computer-implemented method may further comprise sending a notification, from the directory service to the private mobile network security controller, that the list of security groups for the user has been updated, receiving, by the private mobile network security controller, the list of updated security groups for the user, mapping the received list of updated security groups to the list of data network identifiers, and based on the mapping, updating the list of allowed data network identifiers for the private IMSI.

The computer-implemented method may further comprise, before sending the notification that the private IMSI has been assigned to the user identity in the directory service, assigning, in the directory service, the private IMSI to the user identity.

The private mobile network security controller may be subscribed to receive notifications of private IMSI-related changes in the directory service. Sending the notification that the private IMSI has been assigned to the user identity in the directory service may then be in response to assigning the private IMSI to the user identity.

Alternatively, the computer-implemented method may further comprise, before sending the notification that the private IMSI has been assigned to the user identity in the directory service, requesting, by the private mobile network security controller, notification of a private IMSI-related change to the user identity in the directory service.

The user identity listed in the directory service may further comprise security restrictions for the user. The security restrictions may include one or more of a time-based restriction to access the private mobile network, a private mobile network cell access restriction, and a geographical area restriction to access the private mobile network.

The computer-implemented method may further comprise deactivating, by the private mobile network security controller, the SIM in the private mobile network so as to stop the user's access to the private mobile network. The SIM may be deactivated based on a violation of one of the above security restrictions. The violation may include one or more of exceeding a predetermined time or time window, exceeding a predetermined date, the mobile device entering a predetermined geographic area associated with the private mobile network, and the mobile device exiting a predetermined geographic area associated with the private mobile network.

Alternatively, deactivating the SIM may be based on removing, in the directory service, the private IMSI from the user identity.

The SIM may be one of a physical private network SIM, or a private network eSIM issued to the mobile device. The private mobile network may be integrated into an operational technology (OT) environment that includes one or more operational technology devices. The directory service may be part of a user administration facility of an IT system.

In a second aspect of the present invention, there is provided a private mobile network communication system. The system comprises a directory service that lists a user identity for a user, and comprises a mobile device comprising a subscriber identity module (SIM) having a private international mobile subscriber identity (private IMSI). The user is associated with the mobile device. The system further comprises a private mobile network and a private network security controller. The private network security controller is communicatively coupled to the private mobile network and the directory service. The system is configured to carry out the above-described computer-implemented method.

In a third aspect of the present invention, there is provided one or more computer programs comprising instructions which, when the one or more computer programs are executed by one or more computers/computer processors, cause the one or more computers/ computer processors to carry out the above-described computer-implemented methods. In a fourth aspect of the present invention, there is provided one or more computer-readable media comprising the one or more computer programs. A single computer program may be used, or two or more compute programs may be used that work together via separate devices, for example a computer program running on user device or a computer program running on a piece of network infrastructure. The computer program(s) may be executed to perform any and all of the method steps described above, and/or facilitate certain above-described method steps that may be carried out by a user.

### BRIEF DESCRIPTION OF THE DRAWINGS

In order that the invention can be more readily understood, reference will now be made, by way of example only, to the accompanying drawings in which:
Figure 1 illustrates an exemplary private mobile network communication system.
Figure 2 illustrates an exemplary method of controlling user access to a private mobile network. This method may be carried out by the private mobile network communication system of Figure 1.
Figure 3 illustrates an exemplary method detailing further control of user access to the private mobile network, including mapping security groups into the private mobile network, and updating the security groups.
Figure 4 illustrates an exemplary method detailing further control of user access to the private mobile network, including implementing security restrictions in the private mobile network.
Figure 5 illustrates an exemplary method detailing further control of user access to the private mobile network, including deactivating user access to the private mobile network.
Figure 6 illustrates an exemplary method detailing further control of user access to the private mobile network, including the provisioning of an eSIM to access the private mobile network.

### DETAILED DESCRIPTION OF THE INVENTION

As information technology (IT) and operational technology (OT) worlds come together, there is a need for improved security integration between the two worlds in order to simplify operations and provide a consistent security approach. The present invention provides a way of integrating IT and OT environments, with a focus on improved security.

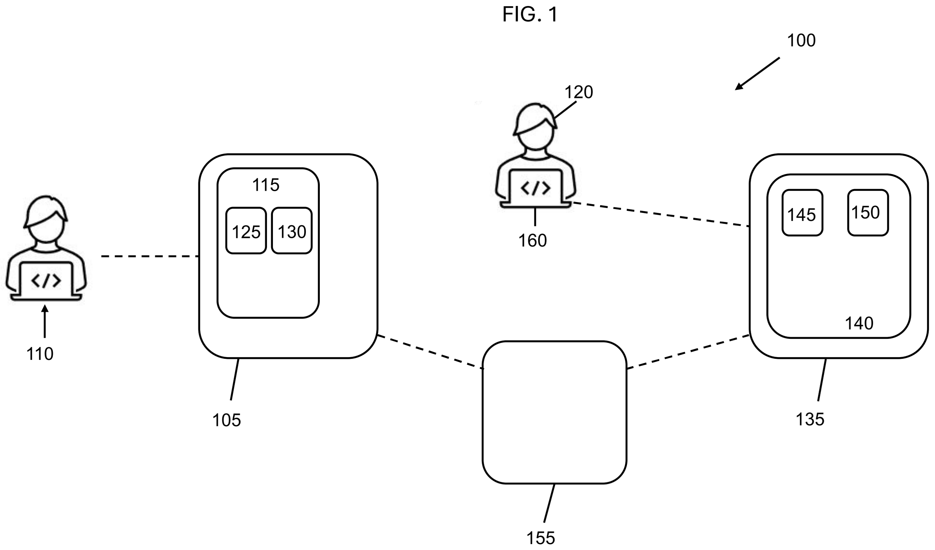

Figure 1 illustrates an exemplary private mobile network communication system 100 configured to carry out the methods described herein. The private mobile network communication system 100 comprises a directory service 105 for managing user information and requirements. The directory service 105 may be part of a user administration facility of an IT system, and stores and maintain information about users and resources. For example, the directory service 105 may be part of a company's traditional IT systems environment. In particular, the directory service 105 is a key component in user administration, serving as a centralised directory service that stores information about objects such as users, systems, policies, and permissions, and also supports one or more of User Account Management, Authentication and Authorization, Group Policies, Security and Compliance, Privileged Access Management, and Identity Management. Exemplary directory services include Active Directory and other lightweight directory access protocol (LDAP) addressable equivalent systems.

Advantageously, the directory service 105 allows an administrator 110, e.g., a company's IT security team or other suitable administrator, to monitor and manage user's (e.g., employee's, contractor's, visitor's) permissions and access to company applications and network resources. For example, a user's security group(s) in the directory service 105 can be updated to allow/restrict the user's access to the resources. Administrators 110 may also use the directory service 105 to onboard new users and manage their access privileges.

The directory service 105 includes a user identity 115 for a user 120 (e.g., an employee). The directory service 105 may include multiple user identities 115 for multiple users 120. Each user identify 115 is associated with, and representative of, a unique user 120. In the directory service 105, each user identity 115 is identifiable by a User Principal Name (UPN) 125. The UPN 125 typically identifies the user 120 as a username and domain in an email address format.

The user identity 115 is listed in the directory service 105 and includes information about the user 120, including the user's access permissions to IT systems. For example, the user identity 115 in the directory service 105 comprises a list of security groups 130 for the user 120. The list of security groups 130 represents the access permissions a user 120 has to resources within the IT systems. For example, an administrator 110 can enable a user's access to a resource (e.g., a shared folder) by adding the user 120 to a security group 130 having the appropriate permissions to access that resource (e.g., shared folder). Similarly, the administrator 110 can disable a user's access to a resource by removing the user 120 from the relevant security group 130. Users 120 may require different access levels to a resource based on their title/role in a company, which can also be governed by security groups 130 in the directory service 105. Typically, a company will already have a directory service 105 implemented in their IT systems. However, a directory service 105 can also be provided by a network provider, if required.

The private mobile network communication system 100 also comprises a private mobile network 135, such as a 4G private mobile network, a 5G private mobile network or any other suitable private mobile network. A private mobile network 135 is a dedicated mobile network that operates over a limited geographical area (e.g. manufacturing sites, distribution centers, ports, factories, warehouses, agricultural facilities, etc.) and uses cellular technologies (e.g., 4G and 5G). A private mobile network 135 is similar to a public mobile network, except that the private mobile network 135 is dedicated to and exclusively used by a specific organisation or across a specific location. Accordingly, unlike public mobile networks (that are open to all), private mobile networks 135 are non-public (only accessible to authorised users). Typically, a private mobile network 135 is installed by a network provider and operated for a specific customer's exclusive use (e.g., a company desiring reliable and secure communications for their OT environment). Advantageously, private mobile networks 135 combine the control of a private network with the security and flexibility of mobile networks.

In some examples, the private mobile network 135 is integrated into an operational technology (OT) environment that includes one or more operational technology devices. The one or more operational technology devices in the OT environment work together to monitor and control industrial processes. For example, the OT environment may include sensors, robots, pumps, supervisory control and data acquisition (SCADA) systems, distributed control systems (DCS), and programable logic controllers (PLC) to name a few. Exemplary OT environments may include building or site control and management systems, such as heating, ventilation, and air conditioning (HVAC) and security systems for business parks through to public buildings, such as schools and hospitals, and extending all the way through to public venues such as stadiums and conference venues. In other examples, the private mobile network 135 can be integrated into an IT environment (e.g. a Wi-Fi replacement for an office environment).

A network provider may deploy the private mobile network 135 across the OT environment, thereby integrating the private mobile network 135 into the OT environment. For example, the network provider deploys a private 4G or 5G network 135 onto a company's OT environment and integrates the private mobile network 135 with the company's directory service 105. This integration can take place physically (e.g. an ethernet connection), logically (e.g., routing of traffic over that ethernet connection between the systems) and at an application level via Application Programming Interfaces (APIs).

The private mobile network 135 comprises a subscriber data repository 140 that stores user profile data and authentication information. In a 4G private mobile network 135, the subscriber data repository 140 is a Common Subscriber Database (CSDB) or a Home Subscriber Server (HSS). In a 5G private mobile network 135, the subscriber data repository 140 is a Unified Data Management system (UDM). The subscriber data repository 140 centralises user data for enhanced security and is configured to manage network user data for user access and registration. For example, providing security/authentication procedures, as well as location and registration management.

The private mobile network 135 also comprises one or more pre-provisioned subscribers 145 stored in the subscriber data repository 140. Each pre-provisioned subscriber 145 is identified by a private international mobile subscriber identity (private IMSI). The private IMSI is a unique identifier, typically a string of digits, which can be used to identify and authenticate a user 120 in the private mobile network 135. Each private IMSI is associated with the private mobile network 135. For example, a list of private IMSIs may be supplied by a SIM manufacturing entity to the private mobile network 135 for loading into the subscriber data repository 140 of the private mobile network 135. Each of these private IMSIs is linked to a subscriber identity module (SIM) that is also supplied by the SIM manufacturing entity. One of the SIMs can be allocated to a user 120 requiring access to the private mobile network 135, providing a way of uniquely identifying the user 120 and providing secure access to the private mobile network 135, as will be discussed in more detail below.

The private mobile network 135 also comprises a list of data network identifiers 150, which is stored in the central subscriber repository 140. In a 4G private mobile network 135, a data network identifier 150 is called an Access Point Name (APN), In a 5G private mobile network 135, a data network identifier 150 is called a Data Network Name (DNN). The data network identifiers 150 reference a logical connection point between the private mobile network 135 and another external network (e.g., the internet). In other words, the data network identifiers 150 act as a gateway between the mobile device and the other network, thereby allowing routing of data between the mobile device and a company's data networks. The list of data network identifiers 150 includes one or more data network identifiers 150, each with its own security settings and controls. Once authorised, a mobile device may connect, using a SIM provisioned onto the mobile device, to one or multiple data network identifiers 150 of the private mobile network 135 at once.

The private mobile network communication system 100 also comprises a private mobile network security controller 155 communicatively coupled to the private mobile network 135 and the directory service 105. The lines of communication are indicated by dashed lines in the figures. The private mobile network security controller 155 may be a logical software component that is implemented into existing IT systems, onto a network provider's management plane or hosted on existing servers or the cloud. The private mobile network security controller 155 is configured to transmit and receive notifications from the directory service 105. The private mobile network security controller 155 is also configured to transmit and receive notifications from the private mobile network 135.

The private mobile network communication system 100 also comprises one or more mobile devices 160. The mobile device 160 may be a mobile phone, computer or other suitable mobile device that can be configured to access a private mobile network 135. The mobile device 160 is associated with a user (e.g., user 120) and enables the user 120 to access the private mobile network 135 that is deployed onto an OT environment. If the private mobile network communication system 100 comprises multiple mobile devices 160, then each mobile device 160 will be associated with a unique SIM having a unique private IMSI. In some examples, the mobile device 160 is company-owned and provided to the user 120 as part of the company's general security practices (e.g., when a user is onboarded into the company). In other examples, the mobile device 160 is the user's 120 own personal mobile device 160.

The mobile device 160 comprises a subscriber identity module (SIM) having a private international mobile subscriber identity (private IMSI). The private IMSI may be the same as one of the private IMSIs that have been stored in the subscriber data repository 140 of the private mobile network 135, as discussed above. For example, a SIM manufacturing entity may provide a SIM including the private IMSI to be incorporated into the mobile device 160, and also provide the same private IMSI to be added to the central subscriber repository 140 of the private mobile network 135.

The SIM is incorporated into the mobile device 160 (either as a physical SIM card or integrated as an eSIM) and stores the private IMSI and authorisation information. In some examples, the SIM is a physical private network SIM (e.g., a physical SIM card that is located in the mobile device 160). In other examples, the SIM is a private network eSIM issued to the mobile device 160 (e.g., a SIM capability embedded directly into the mobile device 160). The SIM provides a way to authenticate the mobile device 160 to the cellular core of the private mobile network 135. In particular, using the private mobile network communication system 100, the mobile device 160 can be configured to allow a user 120 associated with the mobile device 160 to access the private mobile network 135, as will be explained in the methods below.

Controlling user access to a private mobile network is an important factor to consider for a variety of contexts and scenarios. As an example, a company has an infrastructure site (i.e., an OT environment). Employees and contractors come and go from the infrastructure site on a daily basis. The employees and contractors require access to the OT devices connected to and operating on a private mobile network at the infrastructure site. Traditionally, access has been manually provided and revoked, which is time consuming and can lead to security risks such as failing to revoke access in a timely manner and allowing access at all times, including non-working hours. The present invention provides an improved method for controlling a user's access to the private mobile network for the OT environment, as described below.

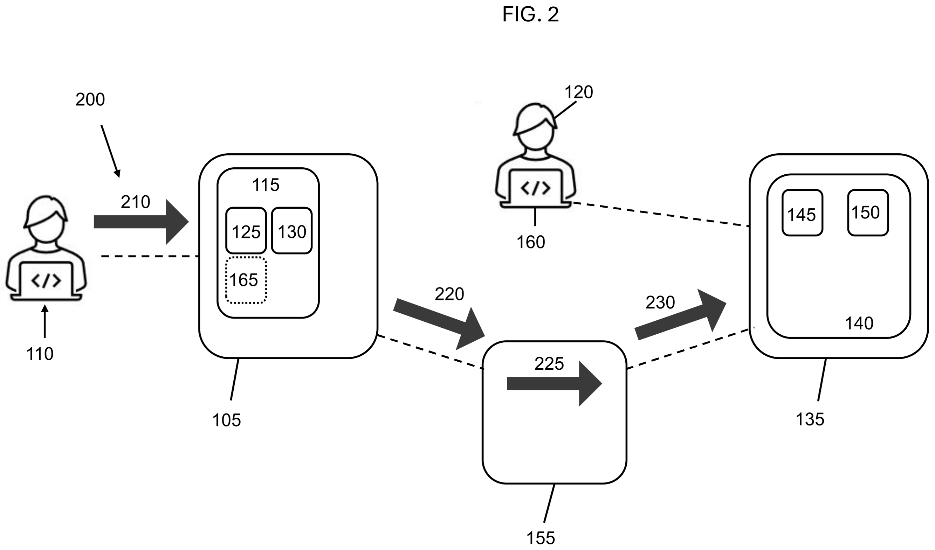

Figure 2 illustrates an exemplary computer-implemented method 200 of controlling user access to a private mobile network 135. The method 200 may be carried out by the private mobile network communication system 100 of Figure 1. Alternatively, the method 200 can be carried out by other suitable private mobile network communication systems. The methods described herein integrate the directory service 105 with the subscriber data repository 140 of the private mobile network 135 in order to control a user's access to the private mobile network 135. Advantageously, these methods automate access control for users 120, making the process of granting and restricting private mobile network access to users 120 simpler, faster and more efficient.

To help provide context to the reader, a real-world example is provided alongside the below discussed method 200 steps of Figure 2. It is to be understood that the method 200 works analogously in other scenarios and contexts, as detailed later on, and that this real-world example is just one of many possible exemplary implementations of the invention. In this example, a user, named John Smith, has recently joined a company. The company runs a manufacturing business and has a manufacturing site (i.e., an OT environment). Employees of the company need to be authorised to access networks and resources at the manufacturing site. The company have a directory service (e.g., directory service 105), implemented in their standard IT systems. In addition, a private mobile network (e.g., private mobile network 135) has been deployed by a network provider onto the manufacturing site and is integrated with the OT devices within the manufacturing site. A set of pre-provisioned SIMs (i.e., pre-provisioned into the private mobile network 135) are available for allowing employees (e.g., user 120) to access the private mobile network 135. The company wish to control John's access to the private mobile network 135 now that he is an employee. An administrator 110, e.g., the company's IT team, sets up a user identity 115 for John Smith in the directory service 105. This user identity 115 includes information about John, including John's access permissions in the company's IT network. John has also been given a mobile device (e.g., mobile device 160) for accessing the private mobile network 135. The mobile device 160 includes one of the SIMs that has been pre-provisioned into the private mobile network 135. The SIM has a private IMSI 165 that uniquely identifies that mobile device 160. The same private IMSI 165 is stored in the subscriber data repository 140 of the private mobile network 135. A private mobile network controller (e.g., private mobile network controller 155) is used to implement the necessary changes in the private mobile network 135 to allow John access to the private mobile network 135.

For John to be able to access the private mobile network 135, his user identity 115 in the directory service 105 must first be linked to the private IMSI 165. Accordingly, a first step 210 of the method 200 comprises assigning the private IMSI 165 to the user identity 115 in the directory service 105 (the assigned private IMSI 165 in the directory service 105 is represented by the dotted box in figure 2). Each method step is indicated by the shaded arrows in figure 2 (and also the subsequent figures). In this case, John's user identity 115 in the directory service 105 is updated (e.g., by the IT team) to assign the private IMSI 165 for that mobile device 160 to his user identity 115. This step 210 establishes a link between John 120 and the private mobile network 135. In some examples, the private IMSI 165 may have already been assigned 210 to John's user identity 115 (i.e., this step can be done in real time or in advance, depending on circumstances).

After the private IMSI 165 has been assigned 210 to the user identity 115, the method 200 comprises, in step 220, sending a notification that the private IMSI 165 has been assigned 210 to the user identity 115 in the directory service 105. This notification is sent from the directory service 105 to the private mobile network security controller 155. The way in which the private mobile network security controller 155 receives such notifications is dependent on the vendor of the directory service 105 in question. In some examples, the private mobile network security controller 155 is subscribed to receive notifications of private IMSI-related changes in the directory service 105 (the private mobile network security controller 155 may also be subscribed to other relevant updates from the directory service 105). For example, a publish-subscribe (Pub/Sub) messaging pattern is used. Accordingly, if an IMSI field in any user identity 115 changes in the directory service 105, the directory service 105 sends a notification of the change (including the specific details of the change(s)) to the private mobile network security controller 155. In such cases, the private mobile network security controller 155 should be subscribed to notifications from the directory service 105 before the private IMSI 165 is assigned 210 to the user identity 115 in step 210 (otherwise the notifications will be missed).

In other examples, the private mobile network security controller 155 is not subscribed to updates from the directory service 105. In which case, the method 200 comprises requesting, by the private mobile network security controller 155, notification of an IMSI-related change to the user identity 115 in the directory service 105. For example, the private mobile network security controller 155 can poll the directory service 105 periodically (e.g., every 15 minutes, every 30 minutes, every 1 hour etc.) or on an on-demand basis to check for any IMSI-related changes in the directory service 105. As part of the polling, the private mobile network security controller 155 compares the most recently pulled state of the directory service 105 to a previously known state to check for any IMSI-related changes. In more detail, the private mobile network security controller 155 includes a list of the private IMSIs stored as part of the one or more pre-provisioned subscribers 145 in the private mobile network 135. The private mobile network security controller 155 polls the directory service 105 (periodically or on-demand) to check for IMSI-related changes. For example, to check if any of the private IMSIs mentioned in the list have been assigned to a user identity 115 in the directory service 105, to check if an IMSI-field has changed in the directory service 105, to check which/if any user identities 115 in the directory service 105 have had a private IMSI 165 assigned to them etc. As mentioned, any changes are highlighted by comparison to an earlier stored version of the private IMSIs list in the private mobile network security controller 155.

Once the private mobile network security controller 155 has been notified 220 that the private IMSI 165 has been assigned 210 to the user identity 115 in the directory service 105, the method 200 moves onto step 230. Step 230 comprises activating, by the private mobile network security controller 155, the SIM in the private mobile network 135 so as to allow the user 120 access to the private mobile network 135 via the mobile device 160. In the example discussed above, the private mobile network security controller 155 is notified that John Smith's user identity 115 in the directory service 105 has been updated to include the private IMSI 165 for the mobile device 160 issued to him (step 220). In response, the private mobile network security controller 155 activates the SIM in John's mobile device 160 so as to allow him access to the private mobile network 135 (step 230). The SIM may be activated by changing the administrative state of the SIM from 'inactive' to 'enabled' (or via any other suitable method that enables/disables registration of that SIM), which permits device registration against the SIM. For example, the mobile device 160 sends a request to the private mobile network 135 requesting access and provides the private IMSI 165. The subscriber data repository 140 of the private mobile network 135 confirms if the private IMSI 165 is valid by checking against the list of private IMSIs of the pre-provisioned subscribers 145 in the subscriber data repository 140. If the private IMSI 165 is valid (i.e., the private IMSI 165 is one of the IMSIs in the pre-provisioned subscribers 145), the private mobile network 135 sends an authentication request to the mobile device 160. The mobile device 160 sends an authentication response back and is then granted access to the private mobile network 135. The mobile device 160 can only send such an authentication request if SIM has been activated, e.g., the administrative state of the SIM has changed to 'enabled'. The SIM can also be activated in other suitable ways.

It is possible to validate that the SIM is in the correct state before the activating step 230. In particular, the method 200 may comprise, in step 225, validating, by the private mobile network security controller 155, that a current status of the SIM is inactive., i.e., confirming that the private IMSI 165 has not been assigned to another user identity 115 first. If the private IMSI 165 has been assigned to another user identity 115 then the SIM will already be activated, and so cannot be 're-activated' to access the private mobile network 135.

Whilst the full details of method 200 are described above and illustrated in figure 2, the invention in its broadest sense can be reduced down steps 220 and 230 alone (i.e., where a private IMSI 165 has already been assigned to the user identity 115 in the directory service 105). The key features of the invention are that, based on notification of the private IMSI 165 assignment in the user identify 115, the SIM is activated in the private mobile network 135, thereby providing secure access to the private mobile network 135.

Once the SIM has been activated on the private mobile network 135, John has access to the company's resources in the private mobile network 135, e.g., after activation 230, John may initially have access to a read-only status dashboard showing how the site is operating, status information on the private mobile network 135 and other resources that do not require more privileged access.

It is possible, and often critical, to update the user's access permissions to the private mobile network 135 once they have been granted access. This is to ensure that the user 120 has the appropriate access needed (e.g., to carry out their job) but not compromise the network's security. The methods discussed herein allows a company (or other organisation) to effectively and efficiently manage security restrictions and user access to their private mobile network 135, as explained below.

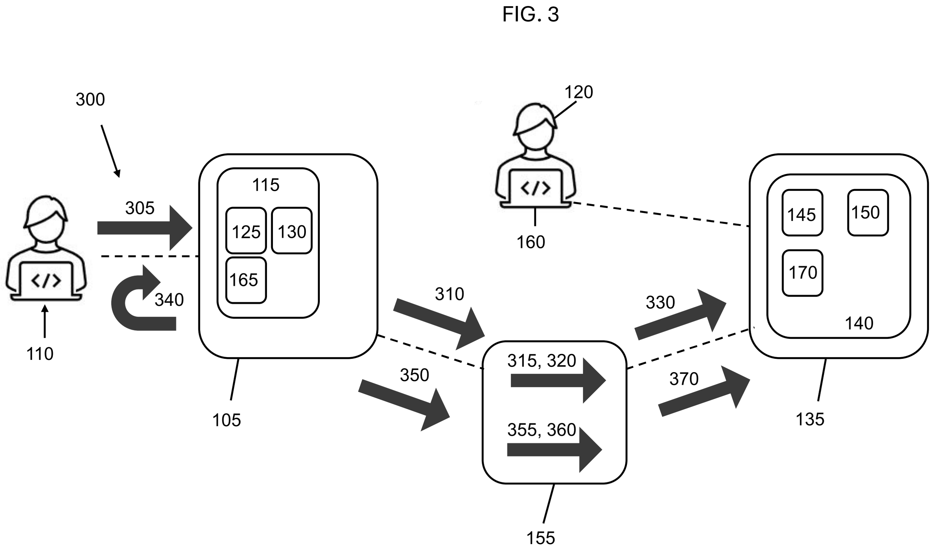

Figure 3 illustrates an exemplary computer-implemented method 300 of further controlling user access to the private mobile network 135 that can be implemented after method 200 illustrated in figure 2, once the user 120 has access to the private mobile network 135. In particular, method 300 maps security groups 130 into the private mobile network 135. The method 300 may be carried out by the private mobile network communication system 100 of Figure 1. Alternatively, the method 300 can be carried out by other suitable private mobile network communication systems.

A user identity 115 listed in the directory service 105 can comprise a list of security groups 130 for the user 120, e.g., for John Smith. The security groups 130 are used to grant users permissions to IT resources. Each security group 130 has a set of access rights, and users 120 are added as members of the security groups 130 appropriate for them (e.g., based on their role in a company).

As mentioned, the private mobile network 135 comprises pre-provisioned subscribers 145, identified by private IMSIs, and a list of data network identifiers 150 stored in the subscriber data repository 140. For each private IMSI 165 in the private mobile network 135, there is also a list of allowed data network identifiers 170. The list of allowed data network identifiers 170 indicates the data network identifiers 150 that can be accessed in the private mobile network 135 by that specific private IMSI 165. In other words, this is the list of all of the network resources in the private mobile network 135 that the user 120 associated to that private IMSI 165 may access. With reference to the example provided above, once John's SIM has been activated on the private mobile network 135, it is desirable to update the list of allowed data network identifiers 170 associated with John's specific private IMSI 165 in order to control John's access to the network resources in the private mobile network 135. This is done by managing the security groups 130 in the directory service 105, as explained with reference to figure 3 now.

In step 310, the method 300 comprises receiving, at the private mobile network security controller 155, the list of security groups 130 for the user 120 (e.g., for John Smith). This may be in response to a step 305 of assigning security groups 130 to the user identity 115 in the directory service 105 (which can be done in real-time or in advance). Similar to described above for receiving notifications of IMSI-related changes, the private mobile network controller 155 can also be subscribed to receive security group updates from the directory service 105 using a Pub/Sub messaging pattern. Alternatively, if the private mobile network security controller 155 is not subscribed to updates from the directory service 105, the private mobile network security controller 155 can request notifications of security group changes in the directory service 105. For example, the private mobile network security controller 105 can poll the directory service 105 periodically or on an on-demand basis to check for any security group changes in the directory service 105. The list of security groups 130 is then sent to the private mobile network controller 155 in response (step 310).

In step 320, the method 300 comprises mapping the list of security groups 130 to the list of data network identifiers 150 in the private mobile network 135, so as to identify the resources in the private mobile network 135 available for the user 120 to access. The mapping 320 may be carried out by the private mobile network controller 155 using a preconfigured mapping table.

In step 330, the method 330 comprises, based on the mapping 320, updating the list of allowed data network identifiers 170 in the private mobile network 135 for the private IMSI 165. These steps implement the appropriate network access for John, so that he can access the relevant resources of the private mobile network 135. Mapping 320 the security groups 130 in the directory service 105 with the data network identifiers 150 in the private mobile network 135 enhances security of the private mobile network 135.

As an example, a preconfigured mapping table in the private mobile network controller 155 is used to map the received security groups 130 to the data network identifiers 150 - see table 1 provided below. A first column lists the directory service security groups 130 for the user 120 (i.e., John). The second column lists the data network identifiers 150 for the private mobile network 135.

**Table 1.**

| **Directory Service Security Groups** | **Private Mobile Network Data Network Identifiers** |
|---|---|
| PROD_Facilities_Management | fm |
| PROD_Security_CCTV | cctv |
| STAGING_Remote_Access | sra |
| PROD_Office_LAN | |
| | edge |

Once a private IMSI 165 is assigned to a user identity 115 in the directory service 105 (e.g., step 210 of method 200), the private mobile network controller 155 can identify which security groups 130 have been added or removed for that user 120. The private mobile network controller 155 aligns these security groups 130 (i.e., first column of table 1) to the corresponding data network identifiers 150 (i.e., second column of table 1) in the private mobile network 135. For example, a user 120 having the security group *PROD*_*Security*_*CCTV* in the directory service 105 will result in the user's private IMSI 165 being able to access the *cctv* data network identifier in the private mobile network 135.

Depending on the circumstances, the security groups 130 for a user 120 may need to be updated. For example, in the case of John Smith joining the company. In other examples, an employee may have been promoted in a company and therefore need additional access to network resources or may move roles and, as such, no longer need the same level of access to resources in the OT environment.

Step 340 of the method 300 comprises updating the list of security groups 130 in the directory service 105 for the user 120. For example, the company's IT team updates John's security groups 130 in the directory service 105 to provide him with more/less access, depending on the circumstances. Step 350 of the method 300 comprises sending a notification, from the directory service 105 to the private mobile network security controller 155, that the list of security groups 130 for the user 120 has been updated. In the same manner as described above, the private mobile network controller 155 can be subscribed to these updates or request them on a periodic or on-demand basis. Based on receiving the notification in step 350, steps 320 and 330 are then repeated (this time labelled as steps 360 and 370) using the updated list of security groups 130. More explicitly, in step 360, the method 300 comprises mapping the received list of updated security groups 130 to the list of data network identifiers 150 in the private mobile network 135. In step 370, the method 300 comprises, based on the new mapping 360, updating the list of allowed data network identifiers 170 in the private mobile network 135 for the private IMSI 165.

Returning to table 1 provided above, examples of the effects of updating the security groups 130 are now given. Adding the security group *PROD*_*Security*_*CCTV* to the user identity 115 in the directory service 105 will result in the *cctv* data network identifier being added to the list of allowed data network identifiers 170 (due to the mapping), thereby allowing the user's private IMSI 165 to access the *cctv* data network identifier in the private mobile network 135. Similarly, removing the *STAGING*_*Remote*_*Access* security group will result in *sra* being removed from the list of allowed data network identifiers 170, so that the user's private IMSI 165 cannot access the *sra* data network identifier in the private mobile network 135.

For entries where no mapping is shown in table 1, these will be ignored. For example, adding/removing *PROD*_*Office*_*LAN* in the directory service 105 will have no impact on the private mobile network 135, because there is no mapping between that directory service security group 130 and the data network identifiers 150 in this case. Equally, provisioning the *edge* data network identifier in the private mobile network 135 will not be altered by the private mobile network controller 155 as there is no mapping to the directory service security group 130 for that user 120.

The private mobile network controller 155 can validate that the SIM is in an active state before carrying out the mapping steps 320, 360. For example, the method 300 comprises, in steps 315 and 355, validating, by the private mobile network security controller 155, that the current status of the SIM is active.

There may also be security restrictions 175 on the user 120 that are above and beyond the security groups 130 listed in the directory service 105. Such security restrictions 175 for the user 120 are applied at SIM level and set the conditions under which the SIM can access the private mobile network 135.

The security restrictions 175 may include different restriction examples. For example, a first security restriction example is a time-based restriction to accessing the private mobile network 175. For example, access is only valid on a set date, at a set time and/or during set time windows (e.g., access only between working hours, Monday to Friday; access for 3 days; access up until 1 January 2026 etc.). As an example, John Smith may only be able to access the company's private mobile network 135 on weekdays between 09:00 - 17:00.

Another example of a security restriction is a private mobile network 135 cell access restriction, i.e., based on which cell(s) a user 120 may access, so that the user 120 is limited to access in predetermined radio cells only. For example, the user 120 is only able to access general areas of the manufacturing site (e.g., common area, office areas), but not secure areas (e.g., a manufacturing room) so as to ensure capacity in the secure area is reserved purely for the manufacturing machines.

A further example of a security restriction is a geographical area restriction to accessing the private mobile network 135. For example, the SIM is deactivated if the mobile device 160 exits a pre-defined geographic area (e.g., when John leaves the manufacturing site). In another example, the SIM is deactivated if the mobile device 160 enters a different pre-defined geographic area (e.g., when John enters an unauthorised area of the manufacturing site). In more detail, a virtual geographical boundary, also known as a geo-fence, is determined and then triggers the security restriction 175 when a mobile device 160 enters or exits the boundary.

These security restriction examples may also be combined. For example, a geo-fence may be constructed around a sensitive area of the manufacturing site to prevent visitors 120 from accessing the private mobile network 135 whilst they are in that area. At the same time, the visitors 120 can also be prevented from accessing the radio cell supporting that area even if they are outside of that area. It could also be that visitors 120 are allowed access anywhere in the site, but they can only use specific radio cells which are not involved in production lines, e.g. so they cannot congest that radio cell.

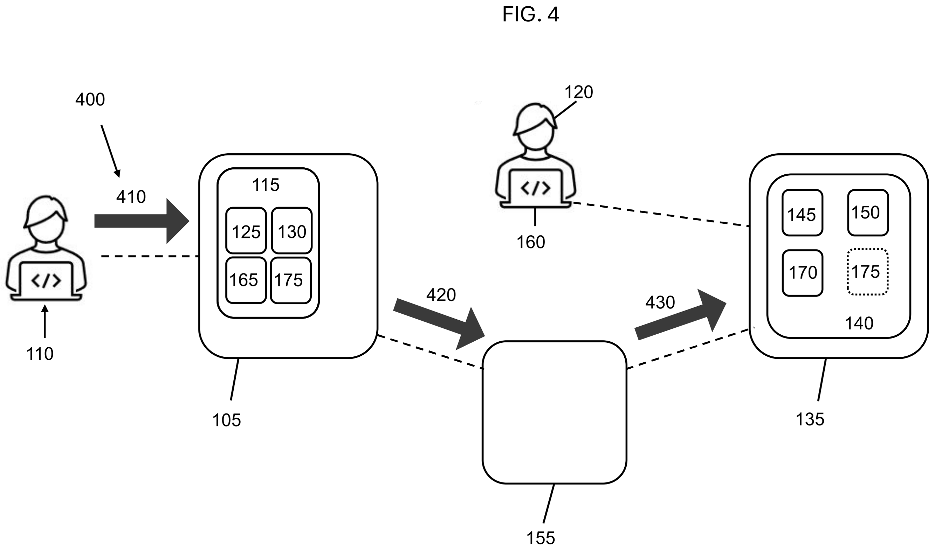

Figure 4 illustrates an exemplary computer-implemented method 400 of further controlling user access to the private mobile network 135 that can be implemented after method 200 and/or method 300 illustrated in figures 2 and 3, once the user 120 has access to the private mobile network 135. In particular, method 400 implements the security restrictions 175 into the private mobile network 135. The method 400 may be carried out by the private mobile network communication system 100 of Figure 1. Alternatively, the method 400 can be carried out by other suitable private mobile network communication systems.

In step 410, the method 400 comprises assigning one or more security restrictions 175 to the user identity 115 in the directory service 105, e.g., by an administrator 110 such as the company's IT team. In step 420, the method 400 comprises receiving, at the private mobile network security controller 155, the one or more security restrictions 175 for the user 120. In the same manner as described above, the private mobile network controller 155 can be subscribed to receive security restriction updates or request them on a periodic or on-demand basis. In step 430, the method 400 comprises implementing the one or more restrictions 175 in the private mobile network 175 (the implementation of the security restrictions 175 in the private mobile network 135 is represented by the dotted box around the security restrictions 175 in figure 4). The implementation of the security restrictions 175 is dependent on the type of security restriction 175. The security restrictions 175 may be static or dynamic restrictions. Static restrictions are directly implementable by the private mobile network 175 (because the private mobile network 175 has the capability to implement/support them). Cell based restrictions are an example of a static restriction. Dynamic restrictions cannot be implemented directly by the private mobile network 135 (because the private mobile network 135 does not have the capability to implement/support them). In this case, the dynamic security restrictions are implemented by the private mobile network controller 155. Time-based and geographic restrictions are examples of dynamic restrictions.

In more detail, for implementing static restrictions, when a security restriction 175 is updated in the user identity 115 in the directory service 105, the private mobile network controller 155 triggers the private mobile network 135 to directly update the subscriber data repository 140 of the private mobile network 135 with that security restriction 175. As an example, the security restriction 175 may map to allowed radio cell(s). This may be implemented by separating cells into separate Location Areas identified by Location Area Codes, and only permitting registration/use of specific private IMSI(s) within that Location Area.

For implementing dynamic restrictions, the private mobile network controller 155 manages and initiates the security restrictions 175 in the private mobile network 155. For example, for a scheduled time access, the private mobile network controller 155 implements a schedule on the subscriber data repository 140 (e.g. deactivate SIM at 18:00 and re-activate at 06:00 the following day). In more detail, at the start time of the security restriction 175, the private mobile network controller 155 deactivates the SIM (i.e., at 18:00), and then at the end time of the security restriction 175, the private mobile network controller 155 activates the SIM again (i.e., at 06:00 the following day). For a geographical security restriction, the private mobile network controller 155 deactivates the SIM when the mobile device 160 enters/exits a pre-defined geographic area (according to the geo-fence conditions) and can activate the SIM when the mobile device 160 exits/enters the pre-defined geographic area.

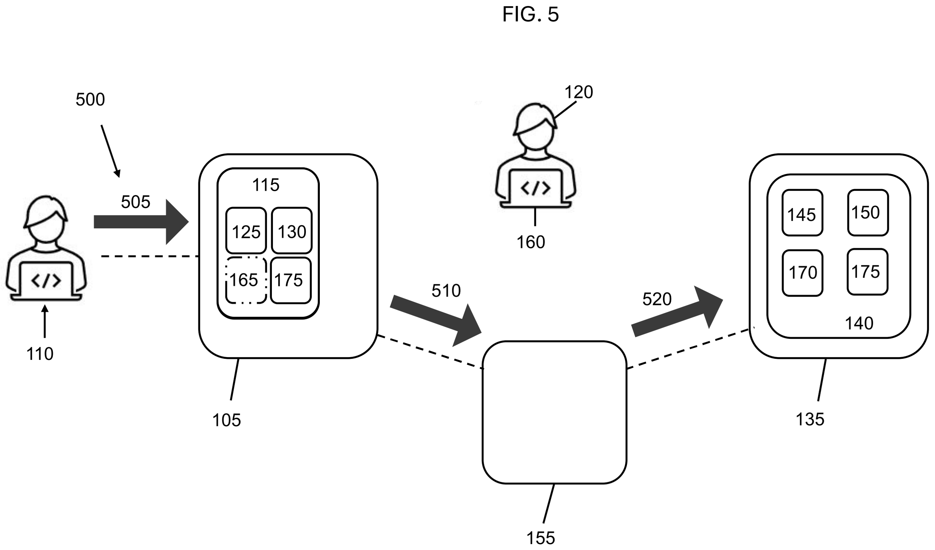

As made clear above, it may be desirable to stop (or restrict) a user's access to the private mobile network 135 once they have been granted access. For example, at the end of John's contract, the company wishes to permanently stop John's user access rights to the private mobile network 135. In other examples, it is desirable to stop/restrict user access temporarily, e.g., for a day visitor, contractor, when John goes home at the end of each working day etc. Implementing the security restrictions 165 into the private mobile network 135 (i.e., method 400) facilitates this. Stopping/restricting access is now described in more detail with reference to figure 5.

Figure 5 illustrates an exemplary computer-implemented method 500 of further controlling user access to the private mobile network 135 that can be implemented after methods 200, 300 and/or 400 illustrated in figures 2, 3 and 4, once the user 120 has access to the private mobile network 135. In particular, method 500 describes the deactivation of a user's SIM. The method 500 may be carried out by the private mobile network communication system 100 of Figure 1. Alternatively, the method 500 can be carried out by other suitable private mobile network communication systems.

In step 510, the method 500 comprises receiving, by the private mobile network security controller 155, a notification of a request to deactivate the SIM. In the same manner as described above, the private mobile network controller 155 can be subscribed to receive deactivation requests from the directory service 105 or can request them on a periodic or on-demand basis. In step 520, the method 500 comprises deactivating, by the private mobile network security controller 155, the SIM in the private mobile network 135 so as to stop the user's access to the private mobile network 135, i.e., disabling use of the SIM on the private mobile network 135, which is represented by the omission of the communication line between the mobile device 160 and the private mobile network 135 in figure 5. The deactivation 520 may occur in different ways and is often vendor dependent. For example, by setting the SIM's administrative state to inactive/suspended, or by other suitable SIM deactivation methods.

The deactivation step 520 can be triggered by different factors. In some examples, the SIM is deactivated 520 based on a violation of one of the security restrictions 175. The deactivation 520 may be on a permanent or temporary basis, depending on the circumstances. E.g., a visitor's SIM may be permanently deactivated after their visit to the site, but an employee's SIM may only be temporarily deactivated when they leave the site at the end of the working day.

The violations can include violation of a time-based security restriction 170. For example, exceeding a predetermined time (e.g., no access after 17:00), exceeding a predetermined time window (e.g., access only between 09:00 - 17:00), and/or exceeding a predetermined date (e.g., no access after 1 January 2026). The security restrictions 175 can include a list of scheduled access times (e.g., stop SIM at 17:00, reactivate at 09:00 the next day, only on weekdays, etc.). Accordingly, the SIM can be deactivated/reactivated according to a schedule.

In some examples, the violations can additionally/alternatively include violation of a geographical area security restriction 175. For example, when the mobile device 160 enters or exits a predetermined geographic area associated with the private mobile network 135 (i.e., entering or exiting a particular geo-fenced area). As examples, exiting a building where the user 120 is permitted to work may deactivate the SIM, or entering a restricted area where the user 120 is not permitted may deactivate the SIM.

In some examples, the violations can additionally/alternatively include violation of a private mobile network cell access security restriction 175. For example, when the mobile device 160 attempts access an unauthorised radio cell of the private mobile network 135.

In some other examples, the deactivation 520 is instead based on removing, in the directory service 105, the private IMSI 165 from the user identity 115 (step 505 of figure 5). The private IMSI 165 removal from the user identity 115 is represented by the dashed double dot box in figure 5). Removing the private IMSI 165 from the user identity 115 results in a permanent deactivation of the SIM (unless/until the private IMSI 165 is then reassigned to the same user identity 115 at a later date).

Sometimes, it is desirable to be able to implement and control a user's private mobile network access using the user's personal mobile device 160 (e.g., a user's own mobile phone/laptop). This is also desirable in cases where a visitor/contractor requires temporary access to the private mobile network 135 and a company does not wish to issue them with a company-owned mobile device 160 comprising a pre-provisioned SIM and private IMSI 165. In such cases, the user's personal mobile device 160 can be used to gain access, but the user's personal mobile device 160 must be eSIM capable, such that a private IMSI 165 can be provisioned onto the user's mobile device 160 for access to the private mobile network 135, as now described.

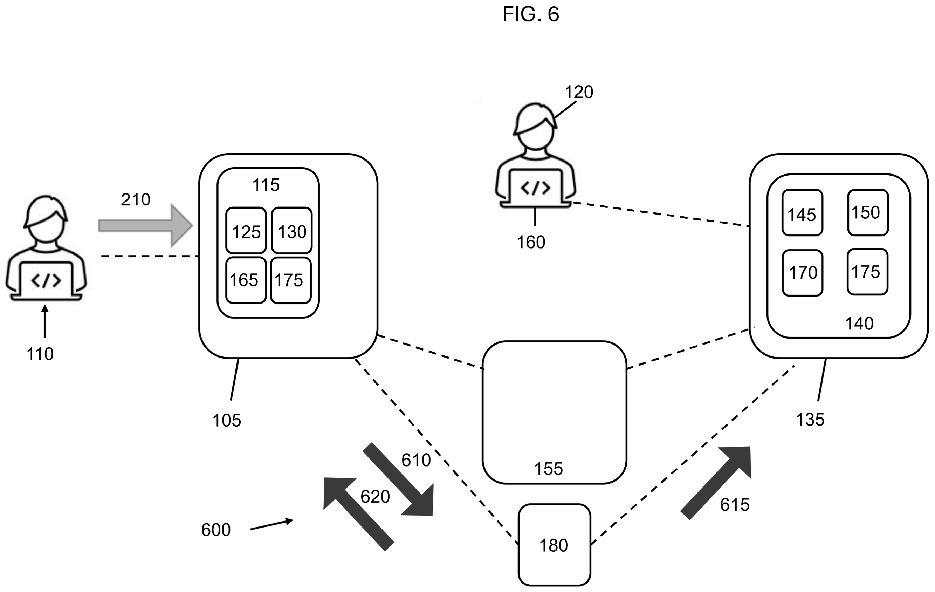

In such cases, the private mobile network communication system 100 further comprises an eSIM provisioning entity 180 (shown in figure 6) that is configured to provision eSIMs onto the private mobile network 135. For example, the eSIM provisioning entity 180 may be part of a network provider's management plane or a standalone computing system in communication with the private mobile network 135, e.g., the eSIM provisioning entity 180 may be the SIM manufacturing entity that also provided the list of private IMSIs to the private mobile network 135, as discussed above with reference to figure 1. The eSIM provisioning entity 180 creates a new private IMSI 165 and loads the new private IMSI 165 into the pre-provisioned subscribers 145 in the central subscriber repository 140 of the private mobile network 135 (this can be done beforehand or in real time).

Figure 6 illustrates an exemplary computer-implemented method 600 of further controlling user access to the private mobile network 125 that can be implemented before method 200 illustrated in figure 2. In particular, method 600 describes the provisioning of an eSIM. The method 600 may be carried out by the private mobile network communication system 100 of Figure 1. Alternatively, the method 600 can be carried out by other suitable private mobile network communication systems.

To help the reader, the earlier example discussing controlling John Smith's access to the private mobile network 135 is extended to this scenario. In this scenario, John 120 has his own mobile device 160 and the company wish to grant him access to the private mobile network 135 using this personal mobile device 160. In other examples, the company might have a contractor 120 coming for a temporary period (and who requires temporary access to the private mobile network 135) and wish to grant access to the private mobile network 135 using the contractor's personal mobile device 160.

The pre-provisioned SIMs on the private mobile network 135 can include one or more eSIMs provisioned onto the private mobile network 135 that have been issued by the eSIM provisioning entity 180. When John 120 first arrives at the site (or beforehand, if needed), an administrator 110 (e.g., the company's IT team) requests, from the eSIM provisioning entity 180, the details of the eSIM and a QR code (or other suitable access code that provides the eSIM and secret key to the user 120) that's associated with the private IMSI 165 (step 610). The eSIM provisioning entity 180 issues the eSIM information and QR code to the IT team (step 620). If needed, before issuing 620, the eSIM provisioning entity 180 can create a new private IMSI 165 and add this to the pre-provisioned subscribers 145 in the central subscriber repository 140 of the private mobile network 135 (step 615). The QR code can then be scanned by John 120 to provision the eSIM onto his own mobile device 160. The method 200 can then be carried out in the same manner as described above, and John 120 will be able to access the private mobile network 135. For example, the private mobile network controller 155 receives notification 220 of the private IMSI assignment 210 and then activates 230 John's eSIM in the private mobile network 135.

In the case of a contractor or visitor 120, the IT team 110 may also generate a temporary user identity 115 for the contractor/visitor 120 in the directory service 105, and then assign the private IMSI 165 to the user identity 115 for the contractor/visitor 120 in the directory service 105, as per step 210 of method 200. The subsequent steps of method 200 can then be carried out in the same manner as described above, and the contractor/visitor 120 will be able to access the private mobile network 135.

The IT team 110 can also add/update security groups 130 and/or security restrictions 175 for John/the contractor/visitor 120 in the directory service 105, and also deactivate 520 the eSIM, in the same manner as per methods 300, 400 and 500 described above.

In order to avoid user access errors, the directory service 105 and subscriber data repository 140 should be audited regularly to bring them into alignment (e.g., where users 120 have left but the company's IT systems have not been updated accordingly). For example, directory service 105 entries that include IMSI-related fields can be compared with the data network identifiers 150 in the subscriber data repository 140 to check for any discrepancies and updated accordingly. Typically, such audits are run on a regular basis, e.g., overnight.

The methods and systems of the invention described above enable more secure control of user's access to a private mobile network 135.

In a first advantage, the invention enables secure user access to a private mobile network 135 generally (e.g., for all users 120). For example, to enable secure access for any appropriate user 120 (such as staff members), each staff member 120 is provided with a mobile device 160 when they join the company that has a pre-provisioned SIM, and each mobile device 160 is linked with their own user identity 115 in the directory service 105 that is managed by the company's IT team 110. This allows the IT team 110 to implement the appropriate security groups 130 and/or restrictions 175 to each staff member 120. As such, each staff member 120 has the appropriate access to the private mobile network 135 that they need. If a staff member 120 leaves the company, the IT team 110 can easily and automatically remove that user's access to the private mobile network 135 by updating the respective user identity 115 in the directory service 105.

In a second advantage, the invention enables secure user access to a private mobile network 135 where the user 120 has their own personal mobile device 160. In this case, access is temporarily granted on their mobile device 160 by the provision of an eSIM that is linked to the user identity 115 in the same manner as discussed above.

In a third advantage, the invention enables secure user access to a private mobile network 135 to be changed/updated. For example, when a staff member 120 moves department or leaves the company. In this case, all changes made to the user identity 115 in directory service 105 are automatically carried through to the private mobile network 135, providing efficient, yet still secure management over time.

The invention has been described above in relation to methods and systems of controlling user access to a private mobile network. The invention also extends to one or more computer programs comprising instructions that, when executed by one or more computers/computer processors, cause the one or more computers/computer processors to implement any of the methods described above, and to one or more computer-readable media comprising the one or more computer programs. A single computer program may be used, or two or more compute programs may be used that work together via separate devices, for example a computer program running on user device or a computer program running on a piece of network infrastructure. The computer program(s) may be executed to perform any and all of the method steps described above, and/or facilitate certain other method steps that may be carried out by a user.

Although specific embodiments have been described above, the skilled person will understand that various modifications and variations are possible without departing from the scope of the present invention that is defined by the appended claims.

## Claims

1. A computer-implemented method of controlling user access to a private mobile network, wherein a user is associated with a mobile device that comprises a subscriber identity module (SIM) having a private international mobile subscriber identity (private IMSI), and wherein a directory service lists a user identity for the user, the method comprising:
sending a notification, from the directory service to a private mobile network security controller, that the private IMSI has been assigned to the user identity in the directory service; and
activating, by the private mobile network security controller, the SIM in the private mobile network so as to allow the user access to the private mobile network via the mobile device.

2. The computer-implemented method of claim 1, wherein the user identity listed in the directory service comprises a list of security groups for the user, wherein the private mobile network comprises a list of data network identifiers and a list of allowed data network identifiers for the private IMSI, and wherein the method further comprises:
receiving, by the private mobile network security controller, the list of security groups for the user;
mapping the received list of security groups to the list of data network identifiers; and
based on the mapping, updating the list of allowed data network identifiers for the private IMSI.

3. The computer-implemented method of claim 2, further comprising:
sending a notification, from the directory service to the private mobile network security controller, that the list of security groups for the user has been updated;
receiving, by the private mobile network security controller, the list of updated security groups for the user;
mapping the received list of updated security groups to the list of data network identifiers; and
based on the mapping, updating the list of allowed data network identifiers for the private IMSI.

4. The computer-implemented method of any preceding claim, further comprising, before sending the notification that the private IMSI has been assigned to the user identity in the directory service:
assigning, in the directory service, the private IMSI to the user identity.

5. The computer-implemented method of any preceding claim, wherein the private mobile network security controller is subscribed to receive notifications of private IMSI-related changes in the directory service.

6. The computer-implemented method of claim 5 when dependent on claim 4, wherein sending the notification that the private IMSI has been assigned to the user identity in the directory service is in response to assigning the private IMSI to the user identity.

7. The computer-implemented method of any of claims 1 - 4, further comprising, before sending the notification that the private IMSI has been assigned to the user identity in the directory service:
requesting, by the private mobile network security controller, notification of a private IMSI-related change to the user identity in the directory service.

8. The computer-implemented method of any preceding claim, wherein the user identity listed in the directory service further comprises security restrictions for the user, the security restrictions including one or more of:
a time-based restriction to access the private mobile network;
a private mobile network cell access restriction; and
a geographical area restriction to access the private mobile network.

9. The computer-implemented method of any preceding claim, further comprising:
deactivating, by the private mobile network security controller, the SIM in the private mobile network so as to stop the user's access to the private mobile network.

10. The computer-implemented method of 9 when dependent on claim 8, wherein the SIM is deactivated based on a violation of one of the security restrictions, and optionally, wherein the violation includes one or more of:
exceeding a predetermined time or time window;
exceeding a predetermined date;
the mobile device entering a predetermined geographic area associated with the private mobile network; and
the mobile device exiting a predetermined geographic area associated with the private mobile network.

11. The computer-implemented method of claim 9, wherein deactivating the SIM is based on removing, in the directory service, the private IMSI from the user identity.

12. The computer-implemented method of any preceding claim, wherein the SIM is one of:
a physical private network SIM; or
a private network eSIM issued to the mobile device.

13. The computer-implemented method of any preceding claim, wherein the private mobile network is integrated into an operational technology environment that includes one or more operational technology devices.

14. The computer-implemented method of any preceding claim, wherein the directory service is part of a user administration facility of an IT system.

15. A private mobile network communication system comprising:
a directory service that lists a user identity for a user;
a mobile device comprising a subscriber identity module (SIM) having a private international mobile subscriber identity (private IMSI), wherein the user is associated with the mobile device;
a private mobile network; and
a private network security controller, the private network security controller communicatively coupled to the private mobile network and the directory service;
wherein the private mobile network communication system is configured to carry out the computer-implemented method of any preceding claim.
